# EUROPÄISCHE PATENTSCHRIFT

(11) **EP 1 084 933 B1**
(45) Veröffentlichungstag und Bekanntmachung des Hinweises auf die Patenterteilung: **19.12.2001**
(21) Anmeldenummer: 99118295.7
(22) Anmeldetag: 15.09.1999
(51) Int. Cl.: B62D 3/12

(54) **Zahnstangenlenkgetriebe, insbesondere für Kraftfahrzeuge**
Rack-and-pinion steering gear, in particular for motor vehicles
Mécanisme de direction à crémaillère, notamment pour automobiles

(43) Veröffentlichungstag der Anmeldung: 21.03.2001
(73) Patentinhaber: Ford Global Technologies, Inc., A subsidiary of Ford Motor Company, Dearborn, Michigan 48126 (US)
(72) Erfinder: Neureder, Uwe, 46487 Wesel (DE)
(74) Vertreter: Messulam, Alec Moses

(56) Entgegenhaltungen:
- DE-A- 1 605 911
- DE-A- 2 928 732
- DE-A- 19 717 797

## Beschreibung

Die Erfindung bezieht sich auf ein Zahnstangenlenkgetriebe, insbesondere für Kraftfahrzeuge, bestehend aus einem mit einer Lenkwelle verbundenen Antriebsritzel, welches in eine quer hierzu angeordnete, in einem Lenkgetriebegehäuse axial verschiebbare Zahnstange eingreift und wobei die Zahnstange über ein dem Antriebsritzel gegenüberliegend in einer Bohrung im Lenkgetriebegehäuse federbelastetes Druckstück in spielfreiem Eingriff mit dem Antriebsritzel gehalten wird.

Aus der DE 29 28 732 C2 ist ein Zahnstangenlenkgetriebe, insbesondere für Kraftfahrzeuge der im Oberbegriff des Anspruchs 1 erläuterten Art bekannt, bei dem das federbelastete Druckstück in einer Bohrung im Lenkgetriebegehäuse angeordnet ist, die sich senkrecht zur Längsachse der Zahnstange erstreckt und das Druckstück ist hierbei als ein Kunststoffteil ausgebildet, das zusätzlich zu der die axiale Druckkraft aufbringenden Schraubenfeder noch mit einer eingesetzten hutförmigen Schenkelfeder versehen ist, die jegliches radiales Spiel des Druckstückes in seiner Bohrung wegdrückt.

Die bekannte Anordnung ist insofern aufwendiger als neben der erforderlichen Schraubendruckfeder noch die zusätzliche hutförmige Schenkelfeder zum Wegdrücken des radialen Spieles gefertigt und montiert werden muß.

Aus der DE 197 17 797 A1 ist ein weiteres Zahnstangengelenkgetriebe, insbesondere für Kraftfahrzeuge bekannt, bei dem wieder das Druckstück in einer Bohrung des Lenkgetriebegehäuses angeordnet ist, die sich senkrecht zur Längsachse der Zahnstange erstreckt und wobei das Druckstück mehrteilig mit entsprechenden Teilflächen ausgebildet ist, so daß durch die eine die Axialkraft aufbringende Schraubenfeder auch ein Wegdrücken des radialen Spieles des Druckstückes innerhalb seiner Bohrung erreicht wird. Dieses Zahnstangenlenkgetriebe, dessen Druckstück eine Ringnut mit einem O-Ring aufweist, entspricht dem Oberbegriff des Anspruchs 2.

Diese bekannte Anordnung weist den Nachteil auf, daß die mehrteilige Ausführung des Druckstückes von der Fertigung und der Montage her aufwendig ist.

In der DE 1605911 A ist eine Zahnstangenlenkung der im Oberbegriff erläuterten Art offenbart, deren Druckstück im Lenkgetriebegehäuse um einen Winkel von etwa 10° gegenüber der Senkrechten auf der Lenkwellenachse geneigt ist. Zusammen mit dem zweiteiligen Druckstück soll damit eine spielfreie Lagerung der Zahnstange erreicht werden. Während damit in Lenkwellenrichtung das Zahnstangenspiel wesentlich reduziert werden kann, verbleibt ein kleines Spiel in Richtung der Zahnstange, das durch diese Anordnung nicht vollständig unterdrückt werden kann.

Die Aufgabe der Erfindung ist es, für eine spielfreie und klapperfreie Führung des Druckstückes in seiner Bohrung bei hoher radialer Steifigkeit und definierter Axialreibung zu sorgen, ohne daß hierfür zusätzliche die Fertigung oder die Montage erschwerende Maßnahmen in Kauf genommen werden müssen.

Gemäß der Erfindung wird diese Aufgabe gelöst, indem bei einem Zahnstangenlenkgetriebe, insbesondere für Kraftfahrzeuge, gemäß dem Oberbegriff des Patentanspruches 1, die im Kennzeichenteil des Patentanspruches 1 aufgezeigten Merkmale angewendet werden.

Dadurch, daß die das Druckstück aufnehmende Bohrung im Lenkgetriebegehäuse zu einer senkrechten auf die Zahnstangenlängsachse um einen Winkel (α) geneigt ist, der größer ist als der Haftreibungswinkel, der der Materialpaarung zwischen dem Druckstück und der Zahnstange zuzuordnen ist, wird sichergestellt, daß die sich aus der Neigung der Bohrung und der die Axialkraft aufbringenden Schraubenfeder ergebende radiale Kraftkomponente das Druckstück stets in Anlage gegen eine Seite der Bohrung im Lenkgetriebegehäuse hält und so durch Längsvibrationen der Zahnstange verursachte Klappererscheinungen des Druckstückes in der Bohrung vermeidet und darüber hinaus durch das erforderliche Losbrechmoment der Haftreibung zur Gleitreibung noch eine Dämpfung auf Längsschwingungen mit kleinster Auslenkungsamplitude der Zahnstange bewirkt.

Ein weiterer Vorteil ist die genauere Definition der Querkraft, die durch α bestimmt wird und recht genau eingehalten werden kann. Bei den anderen Konstruktionen führt ggf. zu hohe (d.h., höher als für Spielvermeidung erforderlich) Querkraft zu axialem Verklemmen und Spitzen in den Lenkmomenten.

Die im Anspruch 2 definierte Erfindung schlägt eine weitere Lösung für die oben genannte Aufgabe vor.

Die Erfindung wird anhand von in den Figuren gezeigten Ausführungsbeispielen näher erläutert. Es zeigt:
- Fig. 1: eine schematische Schnittdarstellung durch ein Lenkgetriebege-häuse im Bereich des Eingriff des Antriebsritzels in die Zahnstange und dem gegenüberliegenden erfindungsgemäß gezeigt angeordneten Druckstück;
- Fig. 2: einen Schnitt entlang der Linie II-II in Fig. 1;

Eine Zahnstange 1 mit ihrer Längsachse A weist an einer Seite eine meist als Schrägverzahnung ausgeführte Verzahnung 2 für ein Antriebsritzel 3 auf, das mit einer Lenkwelle verbunden ist, über die das Lenkmoment eingeleitet wird.

Die Zahnstange 1 und das Antriebsritzel 3 sind in einem hier nur in einem Teilbereich gezeigten Lenkgetriebegehäuse 4 angeordnet, das gegenüberliegend dem Antriebsritzel 3 mit einem Anschlußstutzen 5 versehen ist, in dem in bekannter Weise eine Bohrung 6 für ein Druckstück 7 angeordnet ist, wobei das Druckstück 7 mit einer halbzylindrischen Mulde 8 gegen die Zahnstange 1 anliegt und von einer axialen Druckfeder 9 beaufschlagt wird, die sich einerseits im Innern des Druckstückes 7 und andererseits an einem Verschlußdeckel 10 der Bohrung 6 abstützt.

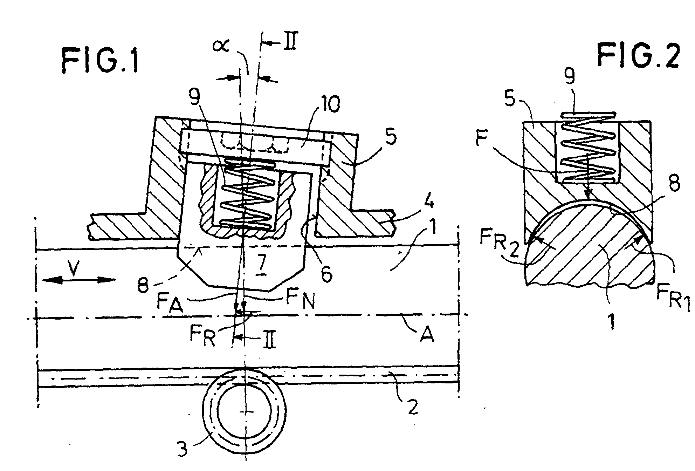

Wie aus der überzeichneten Darstellung in Fig. 1 ersichtlich ist, weist das Druckstück 7 in der Bohrung 6 Spiel auf, das durch die üblichen Fertigungstoleranzen verursacht wird und der auch für thermische Ausdehnung erforderlich ist. Bei auf die Zahnstange 1 in Richtung des Doppelpfeiles V einwirkenden axialen Vibrationskräften kam es bei der herkömmlichen geraden Anordnung eines solchen Druckstückes zu Klappererscheinungen, die sehr störend waren. Dementsprechend sind die verschiedensten Lösungen bekanntgeworden durch zusätzliche elastische Elemente, wie z.B. ein in einer konzentrischen Nut im Druckstück angeordneten O-Ring oder radial spreizende Federanordnungen, dieses Spiel wegzudrücken.

Gemäß der Erfindung wird jedoch auf einfachere Weise für ein ständiges Anliegen des Druckstückes 7 an eine Wandung der Bohrung 6 gesorgt, indem durch die Neigung der Bohrung 6 zu einer senkrechten auf die Längsachse A der Zahnstange 1 in einem Winkel α die durch die Druckfeder 9 erzeugte Axialkraft F_{A} in eine Normalkraft auf die Zahnstange 1 F_{N} und eine Radialkraft F_{R}, die das Druckstück 7 gegen die Wandung der Bohrung 6 drückt, zerlegt wird.

Der Winkel α mit dem die Bohrung 6 des Druckstückes 7 gegenüber einer senkrechten auf die Längsachse A der Zahnstange 1 angestellt wird, muß hierbei größer sein als der Haftreibungswinkel, der sich aus der Materialpaarung zwischen dem Druckstück 7 und der Zahnstange 1 ergibt, wobei die tatsächlichen Kontaktpunkte zwischen der Mulde 8 und der Zahnstange 1 mit berücksichtigt werden müssen, die aus Fig. 2 mit F_{R2} und F_{R1} bezeichnet ersichtlich sind.

Auf diese Weise kann mit einem minimalen Fertigungsaufwand ohne zusätzliche Kunststoff- oder Federbauteile eine spielfreie Anordnung des Druckstückes in seiner Bohrung sichergestellt werden und durch die steife Radialführung und die definierte Axialreibung eine erwünschte Dämpfung auf Schwingungen der Zahnstange mit kleinsten Auslenkungsamplituden ausgeübt werden.

In einer weiteren, in den Figuren nicht dargestellten Ausführungsform kann die definierte seitliche Verlagerung des Druckstückes durch einen entsprechenden, in einer exzentrischen Nut angeordneten O-Ring aufgebracht werden. im Gegensatz zur Ausführung mit konzentrischer Nut ist die seitliche Anlage des Druckstückes in der Bohrung sehr steif.

## Patentansprüche

1. Zahnstangenlenkgetriebe, insbesondere für Kraftfahrzeuge, bestehend aus einem mit einer Lenkwelle verbundenen Antriebsritzel (3), welches in eine quer hierzu angeordnete, in einem Lenkgetriebegehäuse (4) axial verschiebbare Zahnstange (1) eingreift, wobei die Zahnstange (1) über ein dem Antriebsritzel (3) gegenüberliegend in einer Bohrung (6) im Lenkgetriebege-häuse (4) angeordnetes, federbelastetes Druckstück (7) in spielfreiem Eingriff mit dem Antriebsritzel (3) gehalten wird,
**dadurch gekennzeichnet, daß**
- die das Druckstück (7) aufnehmende Bohrung (6) im Lenkgetriebe-gehäuse (4) um einen Winkel (α) zu einer senkrechten auf die Längsachse (A) der Zahnstange (1) geneigt ist, der größer ist als der sich aus der Materialpaarung des Druckstückes (7) mit der Zahnstange (1) ergebende Haftreibungswinkel.

2. Zahnstangenlenkgetriebe, insbesondere für Kraftfahrzeuge, bestehend aus einem mit einer Lenkwelle verbundenen Antriebsritzel, welches in eine quer hierzu angeordnete in einem Lenkungsgetriebegehäuse axial verschiebbarren Zahnstange angreift, wobei die Zahnstange über ein dem Antriebsritzel gegenüberliegend in einer Bohrung im Lenkungsgetriebegehäuse angeordnetes, federbelastetes Druckstück in spielfreiem Eingriff mit dem Antriebsritzel gehalten wird und das Druckstück in seiner Bohrung über einen in eine Ringnut eingelegten O-Ring spielfrei gehalten ist,
**dadurch gekennzeichnet, daß**
- der O-Ring in einer exzentrischen Ringnut derart angeordnet ist, daß das Druckstück einseitig in seiner Bohrung anliegt.

## Claims

1. Rack-and-pinion steering gear, in particular for motor vehicles, consisting of a drive pinion (3) connected with a steering shaft, which engages in a rack (1), which is axially displaceable in steering gear casing (4) and is arranged at right angles thereto, wherein the rack (1) is held via a spring-loaded pressure component (7) arranged in a bore (6) in the steering gear casing (4) lying opposite the drive pinion (3) in clearance-free engagement with the drive pinion (3),
**characterised in that**
- the bore (6) receiving the pressure component (7) is inclined in the steering gear casing (4) by an angle (α) to a vertical on the longitudinal axis (A) of the rack (1), which is greater than the static friction angle resulting from the material pairing of the pressure component (7) with the rack (1).

2. Rack-and-pinion steering gear, in particular for motor vehicles, consisting of a drive pinion connected with a steering shaft, which engages in a rack, which is axially displaceable in steering gear casing and is arranged at right angles thereto, wherein the rack via a spring-loaded pressure component arranged in a bore in the steering gear casing lying opposite the drive pinion is held in clearance-free engagement with the drive pinion and the pressure component is held in its bore in a clearance-free way via an 0-ring inserted in an annular groove,
**characterised in that**
- the O-ring is arranged in an eccentric annular groove in such a way that the pressure component lies in its bore.

## Revendications

1. Mécanisme de direction à crémaillère, notamment pour véhicule automobile, composé d'un pignon d'entraînement (3) qui est en prise avec une crémaillère (1) disposée transversalement par rapport à ce dernier et pouvant être déplacée axialement dans un boîtier de direction (4), sachant que la crémaillère (1) est maintenue avec engrênement sans jeu dans le pignon d'entraînement (3) par le biais d'un élément de pression (7) contraint par un ressort, qui est disposé en face du pignon d'entraînement (3) dans un perçage (6) du boîtier de direction (4), **caractérisé en ce que** le perçage (6) abritant l'élément de pression (7) est incliné avec un angle (α) par rapport à une perpendiculaire à l'axe longitudinal (A) de la crémaillère (1), qui est supérieur à l'angle de frottement par adhérence résultant de l'association des matériaux de l'élément de pression (7) et de la crémaillère (1).

2. Mécanisme de direction à crémaillère, notamment pour véhicules automobiles, composé d'un pignon d'entraînement qui est en prise avec une crémaillère disposée transversalement par rapport à ce dernier et pouvant être déplacée axialement dans un boîtier de direction, sachant que la crémaillère est maintenue étroitement engrenée dans le pignon d'entraînement par le biais d'un élément de pression contraint par un ressort, qui est disposé en face du pignon d'entraînement dans un perçage du boîtier de direction et que l'élément de pression est maintenu sans jeu dans son perçage par le biais d'un joint torique d'étanchéité logé dans une rainure annulaire, **caractérisé en ce que** le joint torique d'étanchéité est disposé dans une rainure annulaire excentrique de telle manière que l'élément de pression soit appliqué contre un côté de son perçage.
